# EUROPÄISCHE PATENTSCHRIFT

(11) **EP 1 008 199 B1**
(45) Veröffentlichungstag und Bekanntmachung des Hinweises auf die Patenterteilung: **13.06.2001**
(21) Anmeldenummer: 98961071.2
(22) Anmeldetag: 06.11.1998
(51) Int. Cl.: H01M 4/86, H01M 4/96, H01M 4/88

(54) **GASDIFFUSIONSELEKTRODE UND DEREN HERSTELLUNG**
GAS DIFFUSION ELECTRODE AND PRODUCTION THEREOF
ELECTRODE DE DIFFUSION GAZEUSE ET SON MODE DE PRODUCTION

(30) Priorität: 19.11.1997 DE 19751296
(43) Veröffentlichungstag der Anmeldung: 14.06.2000
(73) Patentinhaber: SIEMENS AKTIENGESELLSCHAFT, 80333 München (DE)
(72) Erfinder: LIPINSKI, Matthias, D-91052 Erlangen (DE); LEUSCHNER, Rainer, D-91091 Gro enseebach (DE)
(86) Internationale Anmeldenummer: DE9803251
(87) Internationale Veröffentlichungsnummer: WO9927596

(56) Entgegenhaltungen:
- US-A- 5 372 981
- http://www.rzaix340.rz.uni-leipzig.de/~kin d/rgseng.htm XP002098168 in der Anmeldung erwähnt

## Beschreibung

Die Erfindung betrifft eine Gasdiffusionselektrode aus Kohlenstoff sowie ein Verfahren zu deren Herstellung.

Gasdiffusionselektroden gelangen insbesondere in Batterien und vor allem in Brennstoffzellen, wie PEM-Brennstoffzellen (PEM = Polymer-Elektrolyt-Membran), zum Einsatz. In Brennstoffzellen kann beispielsweise die im Wasserstoff und Sauerstoff chemisch gespeicherte Energie, die bei einer Knallgasreaktion freigesetzt werden würde, mittels eines elektrochemischen Prozesses, der eine Umkehrung der Wasserelektrolyse darstellt, in elektrische Energie umgewandelt werden.

PEM-Brennstoffzellen weisen eine zentrale Membran/Elektroden-Einheit auf, die aus einem folienförmigen, protonenleitenden Festkörperelektrolyt besteht, an dem beidseitig möglichst glatte hydrophobe, poröse Gasdiffusionselektroden mit einer Katalysatorbeschichtung angeordnet sind. Der Elektrode auf der Kathodenseite wird Sauerstoff zugeführt, der Elektrode auf der Anodenseite Wasserstoff. Auf den mit Katalysator beschichteten Oberflächen der Elektroden findet ein Elektronenaustausch statt, wodurch eine elektrische Spannung aufgebaut wird. Auf der Kathodenseite entsteht Wasser als Reaktionsprodukt des elektrochemischen Prozesses.

An die Elektroden werden folgende Anforderungen gestellt: Gute elektrische Leitfähigkeit, gute Gasdurchlässigkeit und mechanische Stabilität; außerdem sollen sie eine glatte äußere Oberfläche aufweisen. Eine glatte Oberfläche ist sehr wichtig, weil dadurch der bestmögliche Kontakt - und damit ein geringer elektrischer Kontaktwiderstand - zwischen Elektrode, Katalysator und Elektrolyt zu realisieren ist. Die Elektroden sollen deshalb höchstens eine Oberflächenrauhigkeit im Mikrometer-Bereich besitzen. Um einen ausreichenden Gasfluß zu ermöglichen, soll die Permeabilität der Elektroden für Stickstoff > 10⁻⁶ m²/s bei Normaldruck sein, vorzugsweise > 10⁻⁵ m²/s. Hierzu sollten die größten Poren einen Durchmesser ≥ 100 nm aufweisen, vorzugsweise sollte der Durchmesser 0,5 bis 10 um betragen. Wichtig ist auch ein hydrophober Charakter der Elektroden. Dadurch wird nämlich verhindert, daß sich das bei der elektrochemischen Reaktion zwischen Wasserstoff und Sauerstoff gebildete Wasser in den Poren ansammelt und diese verstopft.

Um die genannten Anforderungen zu erfüllen, werden in Gasdiffusionselektroden modifizierte Kohlepapiere eingesetzt, d.h. Kohlepapiere, die an der Oberfläche mit Ruß oder Graphit verdichtet sind. Diese Materialien sind aber hinsichtlich Oberflächenglätte und Porengröße nicht ausreichend.

Aus der US-PS 5 260 855 ist es bekannt, in Kondensatoren hoher Kapazität ("supercapacitors") Elektroden aus Schaumkohlenstoff einzusetzen; der Schaumkohlenstoff kann ein Aerogel oder Xerogel sein. Auch derartige Elektroden genügen nicht den vorstehend genannten Anforderungen. Zur Erhöhung der elektrischen Leitfähigkeit wird in das Aerogel nämlich eine Kohlenstoffmatrix integriert. Dazu wird die Kohlenstoffmatrix, beispielsweise in Form von Kohlenstoff-Fasern, vor der Gelierung und Pyrolyse in das Gel eingebracht. Da Aerogel und Kohlenstoffmatrix bei der Pyrolyse ein unterschiedliches Schrumpfverhalten zeigen, entstehen Mikrorisse. Das pyrolysierte Aerogel verliert damit teilweise die Haftung an der Oberfläche der Kohlenstoffmatrix. Die durch das Matrixmaterial bestimmte Porengröße der Elektroden kann deshalb nicht exakt eingestellt und reproduziert werden, außerdem wird die Oberfläche der Elektroden bei der Pyrolyse stark aufgerauht.

Aufgabe der Erfindung ist es, eine Gasdiffusionselektrode aus Kohlenstoff bereitzustellen, die eine glatte Oberfläche aufweist, bei der die Porosität beliebig eingestellt werden kann und bei der keine durch Abrisse zwischen dem Elektrodenmaterial und einem Stützgerüst bedingten Probleme auftreten.

Dies wird erfindungsgemäß durch eine Gasdiffusionselektrode erreicht, die durch Pyrolyse eines Verbundes aus einem organischen Polymer räumlich globularer Struktur und einem ganz oder teilweise aus organischem Material bestehenden Verstärkungsgerüst erhältlich ist.

Die Gasdiffusionselektrode nach der Erfindung, die porös ist und eine äußerst glatte Oberfläche aufweist, kann flach und dünn ausgestaltet sein. Dazu wird von porösen, dünnen, flachen Verstärkungsgerüsten ausgegangen. Für Anwendungen auf dem Gebiet von Brennstoffzellen muß die Gasdiffusionselektrode außerdem hydrophob sein. Um dies zu erreichen, wird nach der Pyrolyse noch hydrophobiert.

Polymere räumlich globularer Struktur, sogenannte RGS-Polymere, die im Englischen als SGS-Polymere ("Polymers of spatial globular structure") bezeichnet werden, sind an sich bekannt (siehe dazu: "Isotopenpraxis, Environ. Health Stud.", Bd. 29 (1993), Seiten 275 bis 282, sowie http://rzaix340. rz.uni-leipzig.de/~kind/rgseng.htm, last update:8-15-96). RGS-Polymere besitzen - aufgrund der globularen Struktur - eine hohe Porosität und werden beispielsweise als Filtermaterialien verwendet. Die Größe der Globuli - und damit die Porosität - von RGS-Polymeren läßt sich leicht einstellen. Da die hohe Porosität auch nach der Pyrolyse erhalten bleibt, sind RGS-Polymere in pyrolysierter Form prinzipiell für Gasdiffusionselektroden geeignet.

Das Verstärkungsgerüst, das zur Stabilisierung des RGS-Polymers dient, besteht wenigstens teilweise aus organischem Material. Dies bedeutet im allgemeinen, daß wenigstens 80 % des Verstärkungsgerüstes organisches Material sind. Nichtorganische Anteile können beispielsweise Glasfasern oder auch Flammschutzmittel, wie Borsalze, sein. Das organische Material des Verstärkungsgerüstes weist bei der Pyrolyse eine dem RGS-Polymer vergleichbare Schrumpfung auf (Volumenschrumpf) und das Gerüst ist nach der Pyrolyse noch so stabil, daß es eine Stützfunktion für das pyrolysierte RGS-Polymer übernehmen kann.

Von Vorteil ist, wenn das Verstärkungsgerüst durch das RGS-Polymer gut benetzbar ist. Dazu weist das organische Material vorzugsweise Partialstrukturen auf, die Wasserstoffbrücken ausbilden können. Dies sind insbesondere funktionelle Gruppen wie OH, OR, CO, COOH, COOR, CN, NH₂, NHR, NR₂, CONH₂, CONHR, CONR₂, CO-NH-CO und CO-NR-CO. Besonders vorteilhaft erweisen sich dabei Hydroxyl- und Carbonsäureamidgruppen.

Die Gasdiffusionselektrode nach der Erfindung weist gegenüber bekannten Elektroden deutliche Verbesserungen auf. Dies ist auf die Verwendung eines Verstärkungsgerüstes aus organischem Material zurückzuführen, das bei der Herstellung der Elektrode zusammen mit dem RGS-Polymer - je nach Art und Porosität (des Verstärkungsgerüstes) - eine völlig neue Struktur ausbildet.

Für das Verstärkungsgerüst dienen als organisches Material vorzugsweise Cellulose, Polyamide, insbesondere aromatische Polyamide (Aramide), Polyester und Zellwolle. Daneben kommen beispielsweise aber auch folgende Materialien in Betracht: Polymethylmethacrylat, Polyacrylnitril, Polyharnstoff, Polyurethan, Phenolharze, wie Phenol/Formaldehyd-Harze, und Papier. Das Verstärkungsgerüst selbst kann in Form von porösen Membranen, wie poröses Filtermaterial, sowie flexiblen Faservliesen und Fasergeweben vorliegen.

Das Verstärkungsgerüst kann vorteilhaft einen Porenradiengradienten aufweisen. Dies kann in einfacher Art in der Weise realisiert werden, daß beispielsweise organische Membranen mit unterschiedlicher Porengröße nebeneinander angeordnet und miteinander verbunden, beispielsweise verklebt, werden. Durch den Porenradiengradienten (in den Elektroden), wobei die Elektroden auf der Elektrolytseite eine feinere Porenstruktur als auf der Gasversorgungsseite aufweisen, wird der Abtransport des Wassers - und entsprechend die Leistungsfähigkeit der Brennstoffzelle - erhöht. Bei einem derartigen Verstärkungsgerüst dient die gröber strukturierte Membran außerdem zur zusätzlichen mechanischen Stabilisierung des RGS-Polymers und der daraus entstehenden feinporigen Kohlenstoffschicht. Porengröße, Oberflächenglätte und mechanische Stabilität können somit über das Verstärkungsgerüst in einfacher Weise und gezielt eingestellt werden.

RGS-Polymere lassen sich aus einer Vielzahl von Ausgangsverbindungen herstellen. In der Gasdiffusionselektrode nach der Erfindung werden insbesondere Polymere auf der Basis eines Phenols und eines Aldehyds (als Monomere) eingesetzt, vorzugsweise solche auf der Basis von Resorcin und Formaldehyd. Neben Resorcin (1,3-Dihydroxybenzol) können aber auch andere phenolische Verbindungen verwendet werden, beispielsweise Phenol selbst und die anderen Dihydroxybenzole, d.h. Brenzcatechin und Hydrochinon, sowie Trihydroxybenzole, wie Pyrogallol und Phloroglucin, und ferner Bisphenol-A. Der phenolische Ring kann auch weitere Substituenten aufweisen, beispielsweise Alkylgruppen, substituierte Alkylgruppen, wie CH₂OH, und Carboxylgruppen, d.h. es können beispielsweise Verbindungen wie Alkylphenole und Dihydroxybenzoesäuren eingesetzt werden.

Anstelle von Formaldehyd können auch andere Aldehyde verwendet werden, beispielsweise Furfural (α-Furfurylaldehyd). Der Aldehyd kann auch durch Verbindungen ersetzt werden, die den Aldehyd bereits in vorreagierter Form enthalten, sogenannte Vernetzer. Derartige Verbindungen sind beispielsweise 2,6-Dihydroxymethyl-4-methylphenol, 1,3,5-Triacetoxymethylbenzol, 4,4'-Dimethoxymethyl-diphenylether und Hexamethoxymethyl-melamin (HMMM). Als Vernetzer können außerdem Verbindungen wie polyfunktionelle Melaminether, -alkohole und -acetate und di- oder polyfunktionelle Benzylether, -alkohole und -ester sowie Benzaldehydacetale eingesetzt werden. Wichtig ist dabei lediglich, daß das Phenol und/oder der Aldehyd bzw. Vernetzer polyfunktionell ist, damit ein dreidimensionales Netzwerk gebildet werden kann, und daß im Polymer ein möglichst hoher Aromatenanteil vorhanden ist, um bei der Pyrolyse den Schrumpf so niedrig wie möglich zu halten.

Die RGS-Polymere weisen im allgemeinen ein H/C-Verhältnis ≤ 1,5 und ein (O+N) /C-Verhältnis ≤ 0,6 auf. Bevorzugte pyrolysierbare RGS-Polymere sind beispielsweise folgende Polymere auf Phenol/Formaldehyd-Basis:

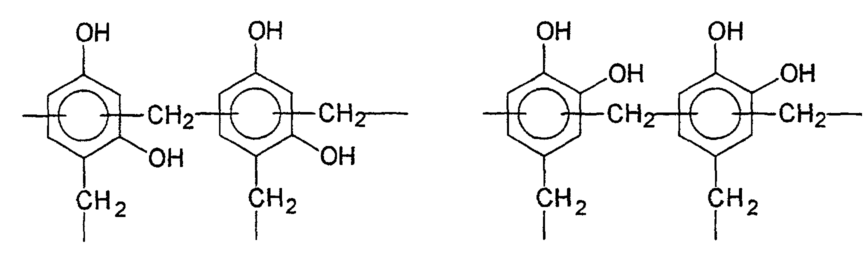

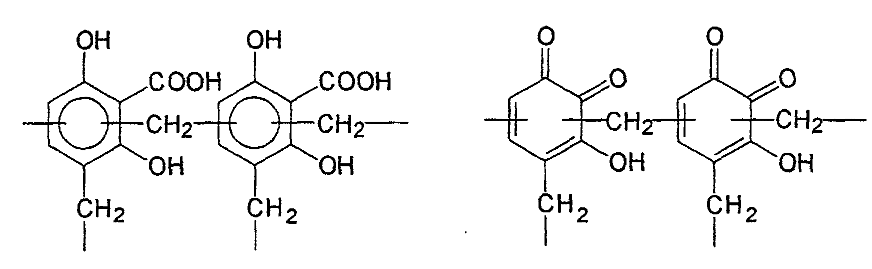

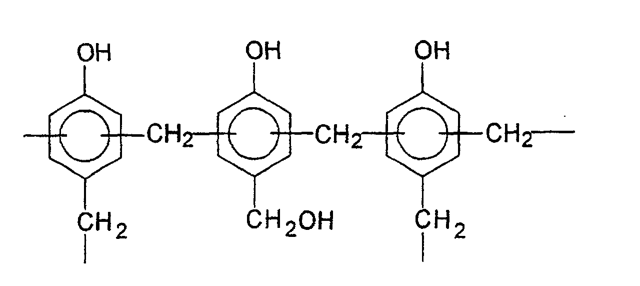

Die Herstellung der Gasdiffusionselektrode nach der Erfindung erfolgt vorteilhaft in der Weise, daß das Verstärkungsgerüst mit einer sauren Lösung von Monomeren ("Monomerlösung"), die in ein RGS-Polymer übergeführt werden können, getränkt wird. Dann wird polymerisiert und gegebenenfalls gealtert, und nachfolgend wird getrocknet und unter Schutzgas pyrolysiert. Falls erforderlich, erfolgt anschließend noch eine Hydrophobierung.

Bei der Polymerisation und bei der Pyrolyse kann eine Wechselwirkung zwischen der Monomerlösung und dem organischen Material des Verstärkungsgerüstes erfolgen. Bei polaren oder hydrophilen organischen Materialien (für das Verstärkungsgerüst), wie Cellulose, mit zum Teil reaktionsfreudigen funktionellen Gruppen auf der Gerüstoberfläche kommt es zu einer Anlagerung von Globuli auf der Gerüstoberfläche, so daß diese sehr effektiv beschichtet wird. Dies führt letztendlich zu einer sehr stabilen Elektrodenstruktur, obwohl die Einzelkomponenten diese Eigenschaften nicht in dieser Weise besitzen.

Neben dem Vorteil, daß das Verstärkungsgerüst aus organischem Material von der Monomerlösung gut benetzt wird, was deren Verarbeitung erleichtert und in vorteilhafter Weise die Struktur und damit die Eigenschaften, wie Porengröße, des daraus entstehenden RGS-Polymers beeinflußt, zeigt sich ein weiterer Vorteil eines derartigen Stützgerüstes bei der Pyrolyse. Das organische Material weist nämlich vergleichbare Schrumpfeigenschaften wie das RGS-Polymer auf. Aufgrund dieser Tatsache werden bei der Pyrolyse Aufwölbungen und Risse, d.h. ein Abreißen des RGS-Polymers vom organischen Membran- oder Fasermaterial, vermieden. Im Gegensatz zu nicht-organischen Stützgerüsten besteht in diesem Fall, selbst nach der Pyrolyse, noch eine innige Verbindung zwischen dem pyrolysierten RGS-Polymer und dem pyrolysierten Verstärkungsgerüst. Dies führt auch zu einer zusätzlichen Verbesserung der Oberflächenglätte.

Die Herstellung von dünnen, flachen, porösen, hydrophoben Gasdiffusionselektroden nach der Erfindung erfolgt im einzelnen prinzipiell folgendermaßen.

Das jeweilige Verstärkungsgerüst wird mit einer Lösung der Monomeren, vorzugsweise Resorcin und Formaldehyd, getränkt. Als Katalysator für die Überführung in das RGS-Polymer dient eine Säure, vorzugsweise Oxalsäure. Da Phenole selbst leicht sauer reagieren und die Verstärkungsgerüste zum Teil auch saure Gruppen aufweisen, kann auf die Verwendung eines Katalysators unter Umständen verzichtet werden.

Das getränkte Verstärkungsgerüst wird auf ein planes Substrat, vorzugsweise eine Glasplatte, gelegt und dann - nach dem Sandwichprinzip - mit einer weiteren Glasplatte abgedeckt, so daß die Probe während der Polymerisation nicht austrocknen kann. Die Probe bleibt in dieser Form einige Zeit liegen, wobei die Polymerisation und gegebenenfalls eine Alterung erfolgt. Dies geschieht vorzugsweise bei einer langsam ansteigenden Temperatur zwischen Raumtemperatur und ca. 90°C.

Die Trocknung der Proben erfolgt bei Normaldruck, vorzugsweise bei erhöhter Temperatur, insbesondere bei ca. 50 bis 100°C.

Die anschließende Pyrolyse erfolgt vorzugsweise bei einer Temperatur zwischen 600 und 2000°C, und zwar unter Schutzgas (insbesondere Argon oder Stickstoff), in reduzierender Atmosphäre (insbesondere Wasserstoff oder Methan) oder im Vakuum. Bei der Pyrolyse werden die organischen Bestandteile des RGS-Polymers und diejenigen des Verstärkungsgerüstes in Kohlenstoff übergeführt. Dabei ist es zweckmäßig, die Proben mit ausreichend temperaturstabilen, inerten Materialien, vorzugsweise Keramiken, zu belasten, um eine Verbiegung zu vermeiden. Durch das angepaste Schrumpfen des organischen Verstärkungsgerüstes resultieren hierbei dünne, stabilisierte Elektrodenmaterialien mit einer bislang nicht erreichten glatten Oberfläche.

Die Hydrophobierung der in der vorstehend beschriebenen Weise hergestellten Elektrodenmaterialien, die für die Verwendung dieser Materialien in Brennstoffzellen erforderlich ist, kann durch eine Silylierung (der inneren Oberfläche) erfolgen. Dazu werden die Elektroden beispielsweise mit einer Lösung von Trimethylchlorsilan getränkt oder mit gasförmigem Trimethylchlorsilan behandelt. Vorteilhaft erfolgt die Hydrophobierung mit einem perfluorierten Polymer. Dazu werden die Elektroden beispielsweise mit einer Lösung eines Copolymers aus Perfluor-2,2-dimethyldioxol und Tetrafluorethylen getränkt.

Anhand von Ausführungsbeispielen soll die Erfindung noch näher erläutert werden.

### Beispiel 1

15 g einer 40 %igen Formaldehydlösung werden mit 10,99 g Resorcin vermischt, und dazu werden 4,0 g einer 0,005 n Oxalsäurelösung sowie 4,0 g Wasser gegeben. Mit dieser Lösung wird ein grobporöser Zellwollefilter (mittlerer Porendurchmesser: ca. 20 µm) getränkt, der dann - nach dem Sandwichprinzip - zwischen zwei planparallele Glasplatten gelegt und in einem geschlossenen Behälter etwa 24 h bei Raumtemperatur unter Luftausschluß gelagert wird; hierbei polymerisiert die Probe. Die Probe läßt man dann noch etwa 24 h bei einer Temperatur von ca. 50 bis 90°C altern, anschließend wird sie aus dem Behälter genommen und bei einer Temperatur von ca. 90°C getrocknet. Die getrocknete Probe wird dann bei ca. 1100°C in einer Stickstoffatmosphäre pyrolysiert, wobei sie etwa 1 h auf dieser Temperatur gehalten wird. Die anschließende Hydrophobierung erfolgt in der Weise, daß die Probe mit einer 1 %igen Lösung eines Copolymers aus Perfluor-2,2-dimethyldioxol und Tetrafluorethylen in Perfluordecan getränkt wird.

Nach dem Abtropfen der überschüssigen Lösung wird die Probe zur Trocknung kontinuierlich auf ca. 330°C aufgeheizt und etwa 15 min auf dieser Temperatur gehalten.

Bei einer derartigen Vorgehensweise wird eine hydrophobe, mechanisch stabile Gasdiffusionselektrode mit einem Porendurchmesser von ca. 10 µm erhalten. Die Oberflächenrauhigkeit der Elektrode liegt in der gleichen Größenordnung.

### Beispiel 2

45 g einer 40 %igen Formaldehydlösung werden mit 33 g Brenzcatechin vermischt, und dazu werden 22 g einer 0,01 n Oxalsäurelösung gegeben. Mit dieser Lösung wird ein grobporöses Polyestervlies (mittlerer Porendurchmesser: ca. 50 um) getränkt und nachfolgend mit der Lösung nochmals besprüht. Dann wird das Vlies - nach dem Sandwichprinzip - zwischen zwei planparallele Glasplatten gelegt und in einem geschlossenen Behälter etwa 24 h bei ca. 50°C unter Luftausschluß gelagert; hierbei polymerisiert die Probe. Die Probe wird anschließend mit Aceton gespült und etwa 24 h bei einer Temperatur von ca. 90°C getrocknet. Die getrocknete Probe wird dann bei ca. 1100°C in einer Stickstoffatmosphäre pyrolysiert, wobei sie etwa 1 h auf dieser Temperatur gehalten wird. Die anschließende Hydrophobierung erfolgt in der gleichen Weise wie in Beispiel 1.

Bei einer derartigen Vorgehensweise wird eine hydrophobe, mechanisch stabile Gasdiffusionselektrode mit einem Porendurchmesser von ca. 5 µm erhalten. Die Oberflächenrauhigkeit der Elektrode liegt in der gleichen Größenordnung.

### Beispiel 3

45 g einer 40 %igen Formaldehydlösung werden mit 33 g Resorcin vermischt, und dazu werden 22 g einer 0,012 n Oxalsäurelösung gegeben. Mit dieser Lösung wird ein grobporöses Vlies aus Polymethylmethacrylat (mittlerer Porendurchmesser: ca. 40 um) getränkt und nachfolgend mit der Lösung nochmals besprüht. Dann wird das Vlies - nach dem Sandwichprinzip - zwischen zwei planparallele Glasplatten gelegt und in einem geschlossenen Behälter etwa 24 h bei ca. 65°C unter Luftausschluß gelagert; hierbei polymerisiert die Probe. Die Probe wird anschließend etwa 24 h bei einer Temperatur von ca. 90°C getrocknet. Die getrocknete Probe wird dann bei ca. 1100°C in einer Stickstoffatmosphäre pyrolysiert, wobei sie etwa 1 h auf dieser Temperatur gehalten wird. Die anschließende Hydrophobierung erfolgt in der Weise, daß die Probe zunächst etwa 24 h bei ca. 90°C einer gesättigten Wasserdampfatmosphäre ausgesetzt wird. Diese Prozedur wird in einer gesättigten Trimethylchlorsilan-Atmosphäre wiederholt, und dann wird die Probe bei ca. 100°C getrocknet.

Bei einer derartigen Vorgehensweise wird eine hydrophobe, mechanisch stabile Gasdiffusionselektrode mit einem Porendurchmesser von ca. 3 µm erhalten. Die Oberflächenrauhigkeit der Elektrode liegt in der gleichen Größenordnung.

## Patentansprüche

1. Gasdiffusionselektrode aus Kohlenstoff, erhältlich durch Pyrolyse eines Verbundes aus einem organischen Polymer räumlich globularer Struktur und einem ganz oder teilweise aus organischem Material bestehenden Verstärkungsgerüst.

2. Gasdiffusionselektrode nach Anspruch 1, **dadurch gekennzeichnet**, daß sie hydrophobiert ist.

3. Gasdiffusionselektrode nach Anspruch 1 oder 2, d a**durch gekennzeichnet**, daß das organische Material Partialstrukturen aufweist, die Wasserstoffbrücken ausbilden können.

4. Gasdiffusionselektrode nach einem der Ansprüche 1 bis 3, **dadurch gekennzeichnet**, daß das organische Material Cellulose, Polyamid, insbesondere aromatisches Polyamid, Polyester oder Zellwolle ist.

5. Gasdiffusionselektrode nach einem oder mehreren der Ansprüche 1 bis 4, **dadurch gekennzeichnet,** daß das Verstärkungsgerüst einen Porenradiengradienten aufweist.

6. Gasdiffusionselektrode nach einem oder mehreren der Ansprüche 1 bis 5, **dadurch gekennzeichnet,** daß das Polymer räumlich globularer Struktur ein H/C-Verhältnis ≤ 1,5 und ein (O+N)/C-Verhältnis ≤ 0,6 aufweist.

7. Gasdiffusionselektrode nach einem oder mehreren der Ansprüche 1 bis 6, **dadurch gekennzeichnet,** daß das Polymer räumlich globularer Struktur ein Polymer auf Phenol/Aldehyd-Basis ist.

8. Verfahren zur Herstellung einer Gasdiffusionselektrode nach einem oder mehreren der Ansprüche 1 bis 7, **dadurch gekennzeichnet**, daß das Verstärkungsgerüst mit einer sauren Lösung von ein Polymer räumlich globularer Struktur bildenden Monomeren getränkt wird, daß polymerisiert und getrocknet und nachfolgend unter Schutzgas pyrolysiert wird, und daß gegebenenfalls hydrophobiert wird.

9. Verfahren nach Anspruch 8, **dadurch gekennzeichnet,** daß die Pyrolyse bei einer Temperatur zwischen 600 und 2000°C durchgeführt wird.

10. Verfahren nach Anspruch 8 oder 9, **dadurch gekennzeichnet**, daß die Hydrophobierung mittels eines perfluorierten Polymers erfolgt.

## Claims

1. Gas diffusion electrode made of carbon, obtainable by pyrolysis of a composite of an organic polymer of spatial globular structure and a reinforcing skeleton consisting entirely or partly of organic material.

2. Gas diffusion electrode according to Claim 1, characterized in that it is hydrophobicized.

3. Gas diffusion electrode according to Claim 1 or 2, characterized in that the organic material has substructures which can form hydrogen bonds.

4. Gas diffusion electrode according to any of Claims 1 to 3, characterized in that the organic material is cellulose, polyamide, in particular aromatic polyamide, polyester or viscose staple fibres.

5. Gas diffusion electrode according to one or more of Claims 1 to 4, characterized in that the reinforcing skeleton has a pore radius gradient.

6. Gas diffusion electrode according to one or more of Claims 1 to 5, characterized in that the polymer of spatial globular structure has an H/C ratio of ≤ 1.5 and an (O+N)/C ratio of ≤ 0.6.

7. Gas diffusion electrode according to one or more of Claims 1 to 6, characterized in that the polymer of spatial globular structure is a polymer based on phenol/aldehyde.

8. Process for producing a gas diffusion electrode according to one or more of Claims 1 to 7,
characterized in that the reinforcing skeleton is impregnated with an acid solution of monomers which form a polymer of spatial globular structure, in that the material is polymerized and dried and subsequently pyrolysed under protective gas and in that hydrophobicization is carried out if desired.

9. Process according to Claim 8, characterized in that the pyrolysis is carried out at a temperature in the range from 600 to 2000°C.

10. Process according to Claim 8 or 9, characterized in that hydrophobicization is carried out by means of a perfluorinated polymer.

## Revendications

1. Electrode de diffusion gazeuse en carbone qui peut être obtenue par pyrolyse d'un composé constitué d'un polymère organique de structure globulaire dans l'espace et d'un squelette de renforcement constitué en tout ou partie de matière organique.

2. Electrode de diffusion gazeuse suivant la revendication 1, caractérisée en ce qu'elle est rendue hydrophobe.

3. Electrode de diffusion gazeuse suivant la revendication 1 ou 2, caractérisée en ce que la matière organique comporte des structures partielles qui peuvent former des ponts hydrogène.

4. Electrode de diffusion gazeuse suivant l'une des revendications 1 à 3, caractérisée en ce que la matière organique est de la cellulose, un polyamide, notamment un polyamide aromatique, un polyester ou de la cellulose de bois.

5. Electrode de diffusion gazeuse suivant l'une ou plusieurs des revendications 1 à 4, caractérisée en ce que le squelette de renforcement a un gradient de rayon de pore.

6. Electrode de diffusion gazeuse suivant l'une ou plusieurs des revendications 1 à 5, caractérisée en ce que le polymère de structure globulaire dans l'espace a un rapport H/C ≤ 1,5 et un rapport (O+N)/C ≤ 0,6.

7. Electrode de diffusion gazeuse suivant l'une ou plusieurs des revendications 1 à 6, caractérisée en ce que le polymère de structure globulaire dans l'espace est un polymère à base de phénol/aldéhyde.

8. Procédé de préparation d'une électrode de diffusion gazeuse suivant l'une ou plusieurs des revendications 1 à 7, caractérisé en ce qu'il consiste à imprégner le squelette de renforcement d'une solution acide de monomères formant un polymère de structure globulaire dans l'espace qui est polymérisé et séché et ensuite pyrolysé sous gaz de protection, et le cas échéant rendu hydrophobe.

9. Procédé suivant la revendication 8, caractérisé en ce qu'il consiste à effectuer la pyrolyse à une température comprise entre 600 et 2000°C.

10. Procédé suivant la revendication 8 ou 9, caractérisé en ce qu'il consiste à effectuer le traitement destiné à rendre hydrophobe au moyen d'un polymère perfluoré.
